(19) Europäisches Patentamt
European Patent Office
Office européen des brevets

(11) **EP 4 095 412 B1**

(12) **EUROPÄISCHE PATENTSCHRIFT**

(45) Veröffentlichungstag und Bekanntmachung des Hinweises auf die Patenterteilung:
**10.12.2025 Patentblatt 2025/50**

(21) Anmeldenummer: **22173172.2**

(22) Anmeldetag: **13.05.2022**

(51) Internationale Patentklassifikation (IPC):
***F16F 7/10*** *(2006.01)*

(52) Gemeinsame Patentklassifikation (CPC):
**F16F 7/10; F01D 5/16; F01D 5/22; F01D 5/225; F01D 5/26;** F05D 2250/241; F05D 2260/96

(54) **ANORDNUNG ZUR MINDERUNG EINER SCHWINGUNG**

VIBRATION REDUCTION ARRANGEMENT

AGENCEMENT DE RÉDUCTION D'UNE VIBRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2021 DE 102021113164**

(43) Veröffentlichungstag der Anmeldung:
**30.11.2022 Patentblatt 2022/48**

(73) Patentinhaber: **MTU Aero Engines AG 80995 München (DE)**

(72) Erfinder:
- **Hartung, Andreas
  80995 München (DE)**
- **Hackenberg, Hans-Peter
  80995 München (DE)**
- **Krack, Malte
  70569 Stuttgart (DE)**
- **Theurich, Timo
  70569 Stuttgart (DE)**

(56) Entgegenhaltungen:
EP-A1- 3 667 020    US-A1- 2012 024 646
US-B1- 6 827 551

**Beschreibung**

Die vorliegende Erfindung betrifft eine Anordnung zur Minderung einer Schwingung.

In vielen - teilweise auch ganz unterschiedlichen technischen Bereichen - gibt es schwingfähige Strukturen, deren Schwingungen, insbesondere die Amplituden der Moden bzw. Eigenschwingungen der Strukturen, durch bekannte Maßnahmen zur Schwingungsminderung, wie z.B. Reibdämpfung, die Anbringung von Zusatzgewichten, Amplitudenbegrenzer oder den Einsatz von rheologischen Flüssigkeiten, aktive Dämpfungssysteme, bspw. Piezodämpfer, oder die Kopplung mit zusätzlichen Feder-Masse-Systemen, reduziert werden und/oder bei denen eine Schwingungsminderung vorteilhaft sein kann, beispielsweise um die Lebensdauer der Struktur zu verlängern, Geräuschemissionen der Struktur zur verringern und/oder die Gefahr einer Funktionsbeeinträchtigung der Struktur zu reduzieren.

Beispiele für solche schwingfähigen Strukturen sind Teile, Abschnitte und Komponenten von Motoren, z.B. Elektro- und/oder Verbrennungsmotoren, insbesondere von KFZ-Motoren oder Schiffsmotoren, von Turbinen, von Fertigungsmaschinen, z.B. zum Fräsen und/oder Drehen, von Triebwerken, insbesondere Flugtriebwerken, von Antrieben, beispielsweise Raketenantrieben, von Bauwerken, z.B. Gebäuden oder Brücken, von Fahrzeugen, insbesondere Automobilen, von Flugzeugen, von Raketen, von Satelliten, von irgendwelchen Verkehrsmitteln oder auch damit in Kontakt stehende Teile, Abschnitte und/oder Komponenten.

Anordnungen mit Körpern oder Partikeln in Kävitäten sind aus den Dokumenten EP3667020A1 , US6827551B1 , US20120024646A1 bekannt.

Eine Aufgabe einer Ausführung der vorliegenden Erfindung ist es, eine verbesserte Art der Schwingungsminderung bereitzustellen.

Diese Aufgabe wird durch eine Anordnung mit den Merkmalen des Patentanspruchs 1 gelöst. Vorteilhafte Ausführungsformen der Erfindung sind Gegenstand der Unteransprüche.

Nach einem Aspekt der vorliegenden Erfindung weist eine Anordnung zur Minderung einer Schwingung einer schwingfähigen Struktur auf:

- eine Struktur mit mindestens einer Mode in mindestens einer Richtung, und
- mindestens eine Schwingungsminderungseinrichtung, die zumindest ein eine Kavität, insbesondere geschlossene Kavität, aufweisendes Gehäuse, welches durch die Struktur gebildet ist oder an der Struktur vorgesehen ist, und zumindest einen Körper aufweist, der zur Ausführung von Stoßkontakten mit dem Gehäuse in der zumindest einen Kavität derart angeordnet ist, dass er solange, wie die Struktur in der mindestens einen Mode in der mindestens einen Richtung (durch Fremd-, Selbst- und/oder Parametererregung und/oder Anfangsbedingungen) angeregt ist, wenigstens zeitweise, insbesondere unaufhörlich, Stoßkontakte mit dem Gehäuse ausführt, wobei

    a) für ein Bewegungsspiel B des zumindest einen Körpers in der mindestens einen Richtung in der zumindest einen Kavität gilt:

$$0{,}1 \times A_{0j} < B < 0{,}95 \times A_{0j},$$

    und/oder
    b) für eine Masse $m_i$ des zumindest einen Körpers gilt:

$$m_i < \mu \times M_{jj}, \text{ mit } \mu = \frac{a}{\left(\frac{A1j}{A0j}\right)^2}, \text{ und } 0{,}000001 < a < 0{,}0009,$$

    wobei $A_{0j}$ eine Schwingungsamplitude in der mindestens einen Mode ohne Schwingungsminderungseinrichtung an einer Position, an der die Schwingungsminderungsrichtung vorzusehen ist, bei bestimmungsgemäßem Gebrauch der Struktur angibt,

wobei Mjj eine modale Masse der Struktur in der mindestens einen Mode ist, und

$A_{1j}$ eine maximale Schwingungsamplitude in der mindestens einen Mode bei bestimmungsgemäßem Gebrauch der Struktur mit der Schwingungsminderungseinrichtung an der Position, an der die Schwingungsminderungsrichtung vorzusehen ist, angibt.

Die mindestens eine Mode der Struktur ist eine Schwingung, insbesondere Eigenschwingung, der Struktur, in welcher die Struktur schwingen und/oder angeregt werden kann. Des Weiteren ist die modale Masse der Struktur in der mindestens eine Mode eine in der jeweiligen Mode schwingende, sich bewegende und/oder zum Schwingen angeregte Masse der Struktur.

Hierbei können in einer Ausführung durch den kontinuierlichen, stoßbasierten Impulsaustausch, mittels durch im Wesentlichen elastische Stöße, Schwingungen der Struktur, wie Vibrationen, besonders effektiv vermieden oder zumindest gemindert, vorzugsweise zumindest erheblich vermindert werden. Insbesondere können hierbei in einer Ausführung die Schwingungsamplituden der Struktur mit einer vergleichsweise geringen Gesamtmasse des zumindest einen Körpers signifikant reduziert werden, ohne dass dabei der oder die Körper gleichzeitig an der Stelle der maximalen Modenamplitude angeordnet sein müssen, was in Abhängigkeit von der Ausgestaltung der konkreten Struktur, z.B. einer Brücke, mitunter aufgrund geometrischer oder struktureller Beschränkungen nicht oder nur schwierig umsetzbar sein kann.

Indem der Impulsaustausch zwischen der Struktur und dem zumindest einen Körper über das Gehäuse, das heißt zwischen der Struktur und einem oder mehreren Körpern über das Gehäuse, in dessen Kavität der zumindest eine Körper angeordnet ist, durch im Wesentlichen elastische Stöße, insbesondere mit höchstens 20%, vorzugsweise höchstens 10%, besonders vorzugsweise höchstens 5% Energiedissipation pro Periode der Schwingung bezogen auf die mit der Schwingung assoziierten kinetischen Energie, z.B. durch Reibung, erfolgen kann, können in einer Ausführung Schwingungen der Struktur besonders effektiv mit nur geringen Zusatzmassen des oder der Körper reduziert werden.

In machen Ausführungen weist die Schwingungsminderungseinrichtung mehrere der beschriebenen, insbesondere geschlossene Kavitäten und mehrere der beschriebenen Körper auf. Die vorliegende Beschreibung von "zumindest einer" Kavität und "zumindest einem" Körper kann entsprechend für jede Kavität und jeden Körper der Schwingungsminderungseinrichtung entsprechend zutreffen.

In machen Ausführungen beträgt die Anzahl der Kavitäten und/oder Körper z.B. 1, 2, 3, 4, 5, 10, 20, 100, 150, 200 oder mehr oder liegt in einem Bereich zwischen von 1 bis 300, 1 bis 200, 1 bis 150, 1 bis 100, 1 bis 50, 1 bis 30, 2 bis 10 oder 5 bis 30.

In jeder Kavität der Schwingungsminderungseinrichtung ist jeweils genau ein Körper angeordnet.

Die im Wesentlichen elastischen Stöße können zwischen metallischen und/oder keramischen Kontakt- bzw. Stoßflächen des jeweiligen Körpers und der jeweiligen Kavität bzw. des Gehäuses stattfinden.In einer Ausführung ist durch das Vorsehen der Schwingungsminderungseinrichtung eine maximale Schwingungsamplitude in der mindestens einen Mode um mindestens 5%, 20%, 30%, 40% oder 50% gegenüber der Schwingungsamplitude in der mindestens einen Mode ohne Schwingungsminderungseinrichtung an der Position, an der die Schwingungsminderungsrichtung vorzusehen ist, bei bestimmungsgemäßem Gebrauch der Struktur verringert.

Die Struktur ist eine Lauf- oder Leitschaufel eines Flugtriebwerks, ein Teil oder Abschnitt davon, ein damit in Kontakt stehendes Teil oder Abschnitt.

In einer Ausführung ist die Gesamtmasse des zumindest einen Körpers, insbesondere aller Körper der Schwingungsminderungseinrichtung zusammengenommen, mindestens 100-mal, vorzugsweise mindestens 1000-mal, insbesondere mindestens 10000-mal kleiner als die in der jeweiligen Mode schwingende modale Masse der Struktur und/oder ist die in der jeweiligen Mode schwingende modale Masse höchstens 200000-mal, vorzugsweise höchstens 100000-mal, insbesondere höchstens 50000-mal größer als die Gesamtmasse des zumindest einen Körpers. Für jede Kombination dieser Ober- und Untergrenzen gibt es eine Ausführung der vorliegenden Erfindung.

In einer Ausführung ist die mindestens eine Schwingungsminderungseinrichtung an der Struktur nur in solchen Bereichen angeordnet, in dem die Schwingungsamplitude in der mindestens einen Mode ohne Schwingungsminderungseinrichtung in dem jeweiligen Bereich mindestens 0,1%, vorzugsweise mindestens 1% und/oder höchstens 100%, 50%, 20%, 10%, 5%, 1%, 0,5%, 0,2% der maximalen Schwingungsamplitude in der mindestens einen Mode ohne Schwingungsminderungseinrichtung in dem jeweiligen Bereich beträgt. Für jede Kombination dieser Ober- und Untergrenzen gibt es eine Ausführung der vorliegenden Erfindung.

In einer Ausführung umfasst der zumindest eine Körper ein Ellipsoid, insbesondere eine Kugel, einen Zylinder und/oder einen Quader.

In einer Ausführung beträgt das Bewegungsspiel mindestens eines des zumindest einen Körpers, insbesondere aller Körper, in mindestens einer Richtung, insbesondere in allen Richtungen, höchstens das 2-fache, vorzugsweise höchstens das 1-fache, insbesondere höchstens das 0,5-fache, einer, insbesondere maximalen, Querschnittsabmessung des Körpers und/oder mindestens das 0,05-fache, vorzugsweise mindestens das 0,1-fache, insbesondere mindestens das 0,2-fache, einer, insbesondere maximalen, Querschnittsabmessung des Körpers. Für jede Kombination dieser Ober- und Untergrenzen gibt es eine Ausführung der vorliegenden Erfindung.

In einer Ausführung ist die Struktur eine Turbinenschaufel mit einem Schaufelfuß, einem Verbindungsstück zur Verbindung mit einem Schaufelblatt, einem auf dem Verbindungsstück angeordneten oberen Deckband, und einem unteren Deckband, das den Schaufelfuß und das Verbindungsstück verbindet, wobei die mindestens eine Schwingungsminderungseinrichtung in oder an dem unterem Deckband und/oder in oder an dem oberen Deckband und/oder in oder an dem Verbindungsstück vorgesehen ist.

In einer Ausführung weist der zumindest eine Körper, insbesondere alle Körper oder die Mehrzahl aller Körper, eine metallische oder keramische Oberfläche auf und ist die zumindest eine Kavität, insbesondere alle Kavitäten, durch metallische oder keramische Oberflächen begrenzt, so dass die Stoßkontakte zwischen Metall und Metall, zwischen Keramik und Keramik oder zwischen Metall und Keramik stattfinden bzw. der oder die Körper zur Ausführung solcher, insbesondere im Wesentlichen elastischer, Stoßkontakte in der jeweiligen Kavität angeordnet sind.

Weitere vorteilhafte Weiterbildungen der vorliegenden Erfindung ergeben sich aus der nachfolgenden Beschreibung bevorzugter Ausführungen. Hierzu zeigen, teilweise schematisiert:

Fig. 1      eine Anordnung nach einer Ausführung der vorliegenden Erfindung;

Fig. 2      mögliche Positionen einer Schwingungsminderungseinrichtung an einer Turbinenschaufel, und

Fig. 3, 4      den Effekt und die Effektivität der Schwingungsminderung durch eine Anordnung nach einer Ausführung der vorliegenden Erfindung.

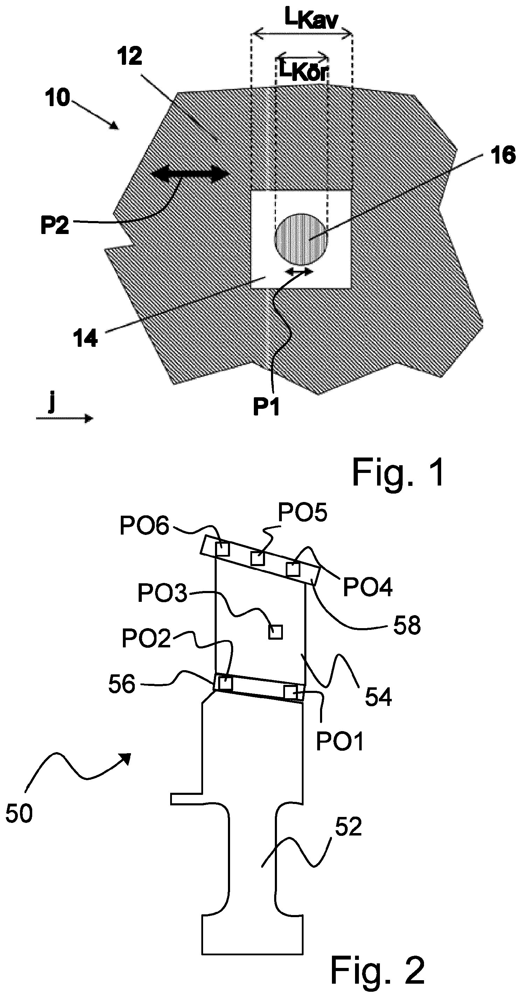

Fig. 1 zeigt eine Anordnung 10 nach einer Ausführung der vorliegenden Erfindung.

Die Anordnung 10 weist eine schwingfähige Struktur 12, welche in Fig. 1 lediglich abschnittsweise gezeigt ist, und eine Schwingungsminderungseinrichtung auf, die dafür vorgesehen ist, eine Schwingung der Struktur 12 zumindest zu reduzieren.

Die Schwingungsminderungseinrichtung weist ein eine Kavität 14, in der dargestellten Ausführung eine geschlossene Kavität 14, aufweisendes Gehäuse, das durch die Struktur 12 gebildet ist und die Kavität 14 umschließt bzw. definiert, und einen Körper 16 auf, der beispielsweise ein Metall oder eine Keramik aufweisen oder aus Metall oder Keramik gebildet sein kann, und derart in der Kavität 14 angeordnet ist, dass er sich spielbehaftet in wenigstens eine Richtung j, wie durch den in der Kavität 14 gezeigten Doppelpfeil P1 veranschaulicht, frei bewegen kann.

Bei der in Fig. 1 gezeigten Ausführung ist der Körper 16 kugelförmig und die Kavität 14 quaderförmig. Bei anderen, nicht gezeigten Ausführungen kann der Körper 16 auch die Form einer Ellipse, eines Zylinders und/oder eines Quaders aufweisen, und die Kavität 16 zylinderförmig gestaltet sein.

Weiterhin kann bei anderen, nicht gezeigten Ausführungen, die Anordnung mehrere Gehäuse aufweisen, die jeweils durch die Struktur 12 gebildet sind oder an der Struktur 12 angebracht bzw. mit dieser verbunden sind, und die jeweils eine Kavität 14 umschließen bzw. definieren, in der jeweils zumindest ein Körper 16 angeordnet ist. Dabei können die einzelnen Kavitäten 14 und die entsprechenden Körper 16 derart ausgestaltet sein, dass sich die in unterschiedlichen Kavitäten 14 angeordneten Körper 16 spielbehaftet in unterschiedlichen Richtungen frei bewegen können.

Die Struktur 12 ist zumindest ein Teil oder Abschnitt einer Lauf- oder Leitschaufel eines Flugtriebwerks, , ein damit in Kontakt stehendes Teil ist oder ein damit in Kontakt stehender Abschnitt sein.

Die Struktur 12 weist mindestens eine Mode, bzw. Schwingungsmode bzw. Eigenschwingung auf, in der die Struktur 12 bei bestimmungsgemäßem Gebrauch zu Schwingungen oder Vibrationen angeregt werden kann. In der in Fig. 1 gezeigten Ausführung schwingt die Struktur 12, wenn sie in der mindestens einen Mode angeregt ist, wie anhand des auf der Struktur 12 gezeigten fetten Doppelpfeils P2 veranschaulicht, entlang der Richtung j hin und her.

Der Körper 16 ist zur Ausführung von Stoßkontakten mit dem durch die Struktur 12 gebildeten Gehäuse, das die Kavität 14 aufweist, derart in der Kavität 14 angeordnet, dass er, solange wie die Struktur 12 in der mindestens einen Mode angeregt ist, wenigstens zeitweise, in einer Ausführung unaufhörlich, Stoßkontakte mit dem Gehäuse, und somit mit der Struktur 12, ausführt, wodurch eine maximale Schwingungsamplitude in der Mode im Vergleich zu einem Fall, in dem Schwingungsminderungseinrichtung nicht vorgesehen ist, um mindestens 50% verringert ist.

Das Bewegungsspiel B des Körpers 16 in der Kavität 14, insbesondere beim Ausführen der Stoßkontakte mit dem Gehäuse, ist durch eine Länge $L_{Kav}$ der Kavität 14 in Bewegungsrichtung j abzüglich der Länge $L_{Kör}$ des Körpers 16 in Bewegungsrichtung j definiert.

Hierbei kann in einer Ausführung das Bewegungsspiel B des Körpers 16 derart gewählt sein, dass die folgende Gleichung erfüllt ist:

$$0,1 \times A_{0j} < B < 0,95 \times A_{0j},$$

Zusätzlich oder alternativ kann eine Masse $m_i$ des zumindest einen Körpers 16 derart gewählt sein, dass folgende Relation erfüllt ist:

$$m_i < \mu \times M_{jj}, \text{ mit } \mu = \frac{a}{\left(\frac{A1j}{A0j}\right)^2}, \text{ und } 0,000001 < a < 0,0009,$$

Hierbei bezeichnen:

- $A_{0j}$ eine Schwingungsamplitude in der mindestens einen Mode ohne Schwingungsminderungseinrichtung an einer Position, an der die Schwingungsminderungsrichtung vorzusehen ist, bei bestimmungsgemäßem Gebrauch der Struktur 12,

- Mjj eine modale Masse der Struktur 12 in der mindestens einen Mode, und

- $A_{lj}$ eine maximale Schwingungsamplitude in der mindestens einen Mode bei bestimmungsgemäßem Gebrauch der Struktur 12 mit der Schwingungsminderungseinrichtung an der Position, an der die Schwingungsminderungsrichtung vorzusehen ist.

Fig. 2 zeigt mögliche Positionen zur Anbringung einer Schwingungsminderungseinrichtung an einer Turbinenschaufel.

Die Turbinenschaufel 50 weist einen Schaufelfuß 52 und ein Verbindungsstück 54 mit einem darauf angeordneten oberen Deckband 58 zur Verbindung mit einem nicht gezeigten Schaufelblatt auf, wobei der Schaufelfuß 52 und das Verbindungsstück 54 über ein unteres Deckband 56 miteinander verbunden sind. Zur Verminderung von Schwingungen der Turbinenschaufel 50 können eine oder mehrere Schwingungsminderungseinrichtungen, die jeweils ein Gehäuse mit einer Kavität 14 und einem darin angeordneten Körper 16 aufweisen, an unterschiedlichen Positionen der Turbinenschaufel 50 vorgesehen sein.

In oder an dem unteren Deckblatt 56 kann beispielsweise eine jeweilige Schwingungsminderungseinrichtung an einer Position PO1 und/oder an einer Position PO2 angeordnet sein. Zusätzlich oder alternativ kann eine Schwingungsminderungseinrichtung in dem Verbindungsstück 54 an einer Position PO3 Svorgesehen sein. Zusätzlich oder alternativ können in oder an dem oberen Deckband 58 an den Positionen PO4, PO5 und/oder PO6 jeweilige Schwingungsminderungseinrichtungen vorgesehen sein.

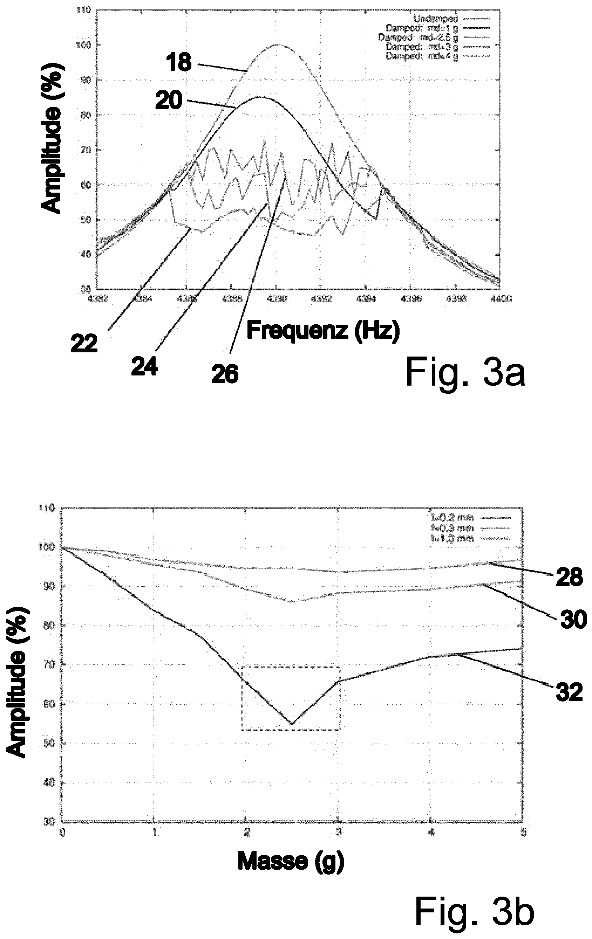

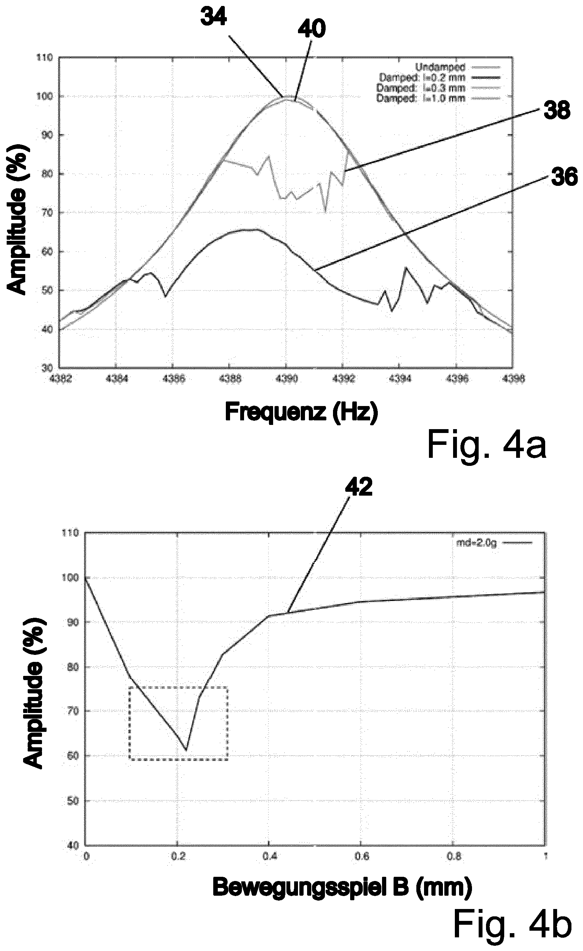

Der Effekt und die Effektivität der Schwingungsminderung mithilfe von Stoßkontakten und Impulsüberträgen unter Verwendung der Schwingungsminderungseinrichtung wird anhand der Fig. 3 und 4 näher erläutert, welche ein experimentell bestätigtes Verhalten zeigen.

Fig. 3a zeigt Schwingungsverläufe, d.h. Amplitude-Frequenz-Verläufe, für eine schwingfähige Struktur ohne Schwingungsminderungseinrichtung (Verlauf 18), mit einer Schwingungsminderungseinrichtung mit einem Körper 16 der Masse 1 g (Verlauf 20), mit einer Schwingungsminderungseinrichtung mit einem Körper 16 der Masse 2,5 g (Verlauf 22), mit einer Schwingungsminderungseinrichtung mit einem Körper 16 der Masse 3 g (Verlauf 24) und mit einer Schwingungsminderungseinrichtung mit einem Körper 16 der Masse 4 g (Verlauf 26). Hierbei beträgt das Bewegungsspiel B bei den Verläufen 20 - 26 jeweils 0,2 mm.

Fig. 3a zeigt deutlich, dass bei der Ausführung von insbesondere unaufhörlichen Stoßkontakten von Körpern 16 mit größeren Massen (Verläufe 22, 24, 26) die Schwingungsamplitude der Mode signifikant gegenüber solchen Anordnungen ohne Stoßkontakte oder Stoßkontakte eines Körpers 16 mit geringer Masse (Verläufe 18, 20) gemindert werden können.

Fig. 3b zeigt für das Beispiel der Fig. 3a die Abhängigkeit der Schwingungsamplitudenminderung von der Masse des Körpers 16 jeweils für ein Bewegungsspiel von 1,0 mm (Verlauf 28), 0,3 mm (Verlauf 30) und 0,2 mm (Verlauf 32).

Fig. 4a zeigt Schwingungsverläufe für eine schwingfähige Struktur 12 ohne Schwingungsminderungseinrichtung (Verlauf 34) sowie mit einer Schwingungsminderungseinrichtung mit einem Körper 16 der Masse 2 g, jeweils mit einem Bewegungsspiel B von 0,2 mm (Verlauf 36), 0,3 mm (Verlauf 38) und 1,0 mm (Verlauf 40).

Fig. 4b zeigt für das Beispiel der Fig. 4a die Abhängigkeit der Amplitudenminderung vom Bewegungsspiel B des Körpers 16 der Masse 2 g (Verlauf 42).

In den Beispielen der Fig. 3 und 4 sind die Stöße im Wesentlichen elastisch und Energiedissipation durch Reibung gering, insbesondere geringer als 5% pro Periode der mit der Schwingung assoziierten kinetischen Energie des Körpers 16.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt. Der Umfang des Schutzes wird durch die beigefügten Ansprüche definiert.

Bezugszeichenliste

| | |
|---|---|
| 10 | Anordnung zur Minderung einer Schwingung |
| 12 | Struktur |
| 14 | Kavität |
| 16 | Körper |
| 18 | Amplitude-Frequenz-Verlauf ohne Schwingungsminderungseinrichtung |
| 20 | Amplitude-Frequenz-Verlauf mit Körper der Masse 1 g |
| 22 | Amplitude-Frequenz-Verlauf mit Körper der Masse 2,5 g |
| 24 | Amplitude-Frequenz-Verlauf mit Körper der Masse 3 g |
| 26 | Amplitude-Frequenz-Verlauf mit Körper der Masse 4 g |
| 28 | Amplitude-Masse-Verlauf für ein Bewegungsspiel von 1,0 mm |
| 30 | Amplitude-Masse-Verlauf für ein Bewegungsspiel von 0,3 mm |
| 32 | Amplitude-Masse-Verlauf für ein Bewegungsspiel von 0,2 mm |
| 34 | Amplitude-Frequenz-Verlauf ohne Schwingungsminderungseinrichtung |
| 36 | Amplitude-Frequenz-Verlauf mit Körper der Masse 2 g und Bewegungsspiel von 0,2 mm |
| 38 | Amplitude-Frequenz-Verlauf mit Körper der Masse 2 g und Bewegungsspiel von 0,3 mm |
| 40 | Amplitude-Frequenz-Verlauf mit Körper der Masse 2 g und Bewegungsspiel von 1,0 mm |
| 42 | Amplitude-Bewegungsspiel-Verlauf für Körper der Masse 2 g |
| 50 | Turbinenschaufel |
| 52 | Schaufelfuß |
| 54 | Verbindungsstück |
| 56 | unteres Deckblatt |
| PO1 | Mögliche Position der Schwingungsminderungseinrichtung an einer Turbinenschaufel |
| PO2 | Mögliche Position der Schwingungsminderungseinrichtung an einer Turbinenschaufel |
| PO3 | Mögliche Position der Schwingungsminderungseinrichtung an einer Turbinenschaufel |
| PO4 | Mögliche Position der Schwingungsminderungseinrichtung an einer Turbinenschaufel |
| PO5 | Mögliche Position der Schwingungsminderungseinrichtung an einer Turbinenschaufel |
| PO6 | Mögliche Position der Schwingungsminderungseinrichtung an einer Turbinenschaufel |

**Patentansprüche**

1. Anordnung (10) zur Minderung einer Schwingung einer schwingfähigen Struktur (12), welche Struktur (12) eine Lauf- oder Leitschaufel eines Flugtriebwerks, ein Teil oder Abschnitt davon oder ein damit in Kontakt stehendes Teil oder Abschnitt ist, aufweisend:

   - eine Struktur (12), welche Struktur (12) eine Lauf- oder Leitschaufel eines Flugtriebwerks, ein Teil oder Abschnitt davon oder ein damit in Kontakt stehendes Teil oder Abschnitt ist, mit mindestens einer Mode in mindestens einer Richtung (j), und
   - mindestens eine Schwingungsminderungseinrichtung, die zumindest ein eine Kavität (14), insbesondere geschlossene Kavität (14), aufweisendes Gehäuse, welches durch die Struktur (12) gebildet ist oder an der Struktur (12) vorgesehen ist, und zumindest einen Körper (16) aufweist, wobei in jeder der zumindest einen Kavität jeweils genau ein Körper angeordnet ist, der zur Ausführung von im Wesentlichen elastischen Stoßkontakten mit dem Gehäuse in der zumindest einen Kavität (14) derart angeordnet ist, dass er solange, wie die Struktur (12) in der mindestens einen Mode in der mindestens einen Richtung (j) angeregt ist, wenigstens zeitweise, insbesondere unaufhörlich, im Wesentlichen elastische Stoßkontakte mit dem Gehäuse ausführt, wobei

   a) für ein Bewegungsspiel B des zumindest einen Körpers (16) in der mindestens einen Richtung (j) in der zumindest einen Kavität (14) gilt:

   $$0,1 \times A_{0j} < B < 0,95 \times A_{0j},$$

   und
   b) für eine Masse $m_i$ des zumindest einen Körpers (16) gilt:

   $$m_i < \mu \times M_{jj}, \text{ mit } \mu = \frac{a}{\left(\frac{A1j}{A0j}\right)^2}, \text{ und } 0,000001 < a < 0,0009,$$

   wobei $A_{0j}$ eine Schwingungsamplitude in der mindestens einen Mode ohne Schwingungsminderungseinrichtung an einer Position, an der die Schwingungsminderungsrichtung vorzusehen ist, bei bestimmungsgemäßem Gebrauch der Struktur (12) angibt,
   wobei Mjj eine modale Masse der Struktur (12) in der mindestens einen Mode ist, und
   $A_{1j}$ eine maximale Schwingungsamplitude in der mindestens einen Mode bei bestimmungsgemäßem Gebrauch der Struktur (12) mit der Schwingungsminderungseinrichtung an der Position, an der die Schwingungsminderungsrichtung vorzusehen ist, angibt.

2. Anordnung (10) nach dem vorhergehenden Anspruch, wobei durch das Vorsehen der Schwingungsminderungseinrichtung eine maximale Schwingungsamplitude in der mindestens einen Mode um mindestens 5%, 20%, 30%, 40% oder 50% gegenüber der Schwingungsamplitude in der mindestens einen Mode ohne Schwingungsminderungseinrichtung an der Position, an der die Schwingungsminderungsrichtung vorzusehen ist, bei bestimmungsgemäßem Gebrauch der Struktur (12) verringert ist.

3. Anordnung (10) nach einem der vorhergehenden Ansprüche, wobei die Gesamtmasse des zumindest einen Körpers (16), insbesondere aller Körper der Schwingungsminderungseinrichtung, mindestens 100-mal, vorzugsweise mindestens 1000-mal, insbesondere mindestens 10000-mal kleiner ist als die in der jeweiligen Mode schwingende modale Masse der Struktur (12) und/oder die in der jeweiligen Mode schwingende modale Masse höchstens 200000- mal, vorzugsweise höchstens 100000-mal, insbesondere höchstens 50000-mal größer ist als die Gesamtmasse des zumindest einen Körpers (16).

4. Anordnung (10) nach einem der vorhergehenden Ansprüche, bei der an der Struktur (12) nur in solchen Bereichen die mindestens eine Schwingungsminderungseinrichtung angeordnet ist bzw. sind, in denen die Schwingungsamplitude in der mindestens einen Mode ohne Schwingungsminderungseinrichtung in dem jeweiligen Bereich mindestens 0,1%, vorzugsweise mindestens 1% und/oder höchstens 100%, 50%, 20%, 10%, 5%, 1%, 0,5%, 0,2% der maximalen Schwingungsamplitude in der mindestens einen Mode ohne Schwingungsminderungseinrichtung in dem jeweiligen Bereich beträgt.

**5.** Anordnung (10) nach einem der vorhergehenden Ansprüche, wobei der oder die Körper (16) Ellipsoide, insbesondere Kugeln, Zylinder und/oder Quader umfassen oder sind.

**6.** Anordnung (10) nach einem der vorhergehenden Ansprüche, wobei das Bewegungsspiel (g) mindestens eines der ein oder mehreren Körper (16), insbesondere aller Körper (16), in mindestens einer Richtung (j), insbesondere in allen Richtungen, höchstens das 2-fache, vorzugsweise höchstens das 1-fache, insbesondere höchstens das 0,5-fache, einer, insbesondere maximalen, Querschnittsabmessung des Körpers (16) beträgt und/oder mindestens das 0,05-fache, vorzugsweise mindestens das 0,1-fache, insbesondere mindestens das 0,2-fache, einer, insbesondere maximalen, Querschnittsabmessung des Körpers (16) beträgt.

**7.** Anordnung (10) gemäß einem der vorhergehenden Ansprüche, wobei die Struktur (12) eine Turbinenschaufel (50) mit einem Schaufelfuß (52), einem Verbindungsstück (54) zur Verbindung mit einem Schaufelblatt, einem auf dem Verbindungsstück (54) angeordneten oberen Deckband, und einem unteren Deckband (56) ist, das den Schaufelfuß (52) und das Verbindungsstück (54) verbindet, und die Schwingungsminderungseinrichtung in oder an dem unterem Deckband (56) und/oder in oder an dem oberen Deckband (56) und/oder in oder an dem Verbindungsstück (54) vorgesehen ist.

**8.** Anordnung (10) gemäß einem der vorhergehenden Ansprüche, wobei der zumindest eine Körper (16) eine metallische oder keramische Oberfläche aufweist und die zumindest eine Kavität (14) durch metallische oder keramische Oberflächen begrenzt ist, so dass die Stoßkontakte zwischen Metall und Metall, zwischen Keramik und Keramik oder zwischen Metall und Keramik stattfinden.

**Claims**

**1.** Arrangement (10) for reducing vibration of a vibratable structure (12), which structure (12) is a rotor blade or guide vane of an aircraft engine, a part or portion thereof or a part or portion in contact therewith, comprising:

- a structure (12), which structure (12) is a rotor blade or guide vane of an aircraft engine, a part or portion thereof or a part or portion in contact therewith, having at least one mode in at least one direction (j), and
- at least one vibration reduction device which comprises at least one housing having a cavity (14), in particular a closed cavity (14), which housing is formed by the structure (12) or is provided on the structure (12), and comprises at least one body (16), wherein exactly one body is arranged in each of the at least one cavity, which body is arranged in the at least one cavity (14), for executing substantially elastic impact contacts with the housing, in such a way that, as long as the structure (12) is excited in the at least one mode in the at least one direction (j), said body executes substantially elastic impact contacts with the housing at least temporarily, in particular continuously, wherein

a) for a movement play B of the at least one body (16) in the at least one direction (j) in the at least one cavity (14), the following applies:

$$0.1 \times A_{0j} < B < 0.95 \times A_{0j},$$

and
b) for a mass $m_i$ of the at least one body (16), the following applies:

$$m_i < \mu \times M_{jj}, \text{with } \mu = \frac{a}{\left(\frac{A_{1j}}{A_{0j}}\right)^2}, \text{ and } 0.000001 < a < 0.0009,$$

wherein $A_{0j}$ indicates a vibration amplitude in the at least one mode without the vibration reduction device in a position in which the vibration reduction direction is to be provided, when the structure (12) is used as intended,
wherein $M_{jj}$ is a modal mass of the structure (12) in the at least one mode, and
$A_{1j}$ indicates a maximum vibration amplitude in the at least one mode when the structure (12) is used as intended with the vibration reduction device in the position in which the vibration reduction direction is to be provided.

**2.** Arrangement (10) according to the preceding claim, wherein the provision of the vibration reduction device reduces a maximum vibration amplitude in the at least one mode by at least 5%, 20%, 30%, 40% or 50% compared to the vibration amplitude in the at least one mode without the vibration reduction device in the position in which the vibration reduction device is to be provided, when the structure (12) is used as intended.

**3.** Arrangement (10) according to either of the preceding claims, wherein the total mass of the at least one body (16), in particular of all bodies of the vibration reduction device, is at least 100 times, preferably at least 1000 times, in particular at least 10,000 times, smaller than the modal mass of the structure (12) vibrating in the relevant mode, and/or the modal mass vibrating in the relevant mode is at most 200,000 times, preferably at most 100,000 times, in particular at most 50,000 times greater than the total mass of the at least one body (16).

**4.** Arrangement (10) according to any of the preceding claims, in which the at least one vibration reduction device is or are arranged on the structure (12) only in regions in which the vibration amplitude in the at least one mode without the vibration reduction device in the relevant region is at least 0.1%, preferably at least 1% and/or at most 100%, 50%, 20%, 10%, 5%, 1%, 0.5%, 0.2% of the maximum vibration amplitude in the at least one mode without the vibration reduction device in the relevant region.

**5.** Arrangement (10) according to any of the preceding claims, wherein the body or bodies (16) comprise or are ellipsoids, in particular spheres, cylinders and/or cuboids.

**6.** Arrangement (10) according to any of the preceding claims, wherein the movement play (g) of at least one of the one or more bodies (16), in particular of all bodies (16), in at least one direction (j), in particular in all directions, is at most 2 times, preferably at most 1 times, in particular at most 0.5 times, a, in particular maximum, cross-sectional dimension of the body (16) and/or at least 0.05 times, preferably at least 0.1 times, in particular at least 0.2 times, a, in particular maximum, cross-sectional dimension of the body (16).

**7.** Arrangement (10) according to any of the preceding claims, wherein the structure (12) is a turbine blade (50) with a blade root (52), a connecting piece (54) for connection to an airfoil, an upper shroud arranged on the connecting piece (54), and a lower shroud (56) which connects the blade root (52) and the connecting piece (54), and the vibration reduction device is provided in or on the lower shroud (56) and/or in or on the upper shroud (56) and/or in or on the connecting piece (54).

**8.** Arrangement (10) according to any of the preceding claims, wherein the at least one body (16) comprises a metal or ceramic surface and the at least one cavity (14) is delimited by metal or ceramic surfaces, so that the impact contacts take place between metal and metal, between ceramic and ceramic or between metal and ceramic.

## Revendications

**1.** Agencement (10) pour la réduction d'une vibration d'une structure (12) vibrante, laquelle structure (12) est une aube mobile ou une aube directrice d'un moteur d'avion, une partie ou une section de ladite aube ou une partie ou une section en contact avec celle-ci, l'agencement présentant :

- une structure (12), laquelle structure (12) est une aube mobile ou une aube directrice d'un moteur d'avion, une partie ou une section de ladite aube ou une partie ou une section en contact avec celle-ci, comportant au moins un mode dans au moins une direction (j), et
- au moins un dispositif de réduction de vibration, lequel présente au moins un boîtier présentant une cavité (14), en particulier une cavité fermée (14), lequel boîtier est formé par la structure (12) ou est prévu sur la structure (12), et présente au moins un corps (16), dans lequel respectivement exactement un corps est disposé dans chacune de l'au moins une cavité, lequel est disposé dans l'au moins une cavité (14) pour la réalisation de contacts par impact sensiblement élastiques avec le boîtier, de telle sorte que, tant que la structure (12) est excitée dans l'au moins un mode dans l'au moins une direction (j), au moins temporairement, en particulier sans interruption, des contacts par impact sensiblement élastiques avec le boîtier sont réalisés, dans lequel

a) s'applique à un jeu de mouvement B de l'au moins un corps (16) dans l'au moins une direction (j) dans l'au moins une cavité (14) :

$$0,1 \times A_{0j} < B < 0,95 \times A_{0j},$$

et

b) s'applique à une masse $m_i$ de l'au moins un corps (16) :

$$m_i \; < \; \mu \; \times \; M_{jj}, \text{avec } \mu = \frac{a}{\left(\frac{A1j}{A0j}\right)^2}, \quad \text{et} \quad 0,000001 < a < 0,0009,$$

où $A_{0j}$ indique une amplitude de vibration dans l'au moins un mode sans dispositif de réduction de vibration à une position dans laquelle la direction de réduction de vibration doit être prévue lors d'une utilisation conforme de la structure (12),

où $M_{jj}$ est une masse modale de la structure (12) dans l'au moins un mode, et

$A_{1j}$ indique une amplitude de vibration maximale dans l'au moins un mode lors d'une utilisation conforme de la structure (12) avec le dispositif de réduction de vibration à la position dans laquelle la direction de réduction de vibration doit être prévue.

**2.** Agencement (10) selon la revendication précédente, dans lequel, en prévoyant le dispositif de réduction de vibration, une amplitude de vibration maximale dans l'au moins un mode est réduite d'au moins 5 %, 20 %, 30 %, 40 % ou 50 % par rapport à l'amplitude de vibration dans l'au moins un mode sans dispositif de réduction de vibration à la position dans laquelle la direction de réduction de vibration doit être prévue lors d'une utilisation conforme de la structure (12).

**3.** Agencement (10) selon l'une des revendications précédentes, dans lequel la masse totale de l'au moins un corps (16), en particulier de tous les corps du dispositif de réduction de vibration, est au moins 100 fois, de préférence au moins 1000 fois, en particulier au moins 10 000 fois inférieure à la masse modale de la structure (12) vibrant dans le mode respectif et/ou la masse modale vibrant dans le mode respectif est au plus 200 000 fois, de préférence au plus 100 000 fois, en particulier au plus 50 000 fois supérieure à la masse totale de l'au moins un corps (16).

**4.** Agencement (10) selon l'une des revendications précédentes, dans lequel l'au moins un dispositif de réduction de vibration est disposé sur la structure (12) uniquement dans des zones dans lesquelles l'amplitude de vibration dans l'au moins un mode sans dispositif de réduction de vibration dans la zone respective est d'au moins 0,1 %, de préférence d'au moins 1 % et/ou d'au plus 100 %, 50 %, 20 %, 10 %, 5 %, 1 %, 0,5 %, 0,2 % de l'amplitude de vibration maximale dans l'au moins un mode sans dispositif de réduction de vibration dans la zone respective.

**5.** Agencement (10) selon l'une des revendications précédentes, dans lequel le ou les corps (16) comprennent ou sont des ellipsoïdes, en particulier des sphères, des cylindres et/ou des parallélépipèdes.

**6.** Agencement (10) selon l'une des revendications précédentes, dans lequel le jeu de déplacement (g) d'au moins l'un parmi le ou les corps (16), en particulier de tous les corps (16), dans au moins une direction (j), en particulier dans toutes les directions, est au plus égal à 2 fois, de préférence au plus égal à 1 fois, en particulier au plus égal à 0,5 fois, une dimension de section transversale, en particulier maximale, du corps (16) et/ou au moins égal à 0,05 fois, de préférence au moins égal à 0,1 fois, en particulier au moins égal à 0,2 fois, une dimension de section transversale, en particulier maximale, du corps (16).

**7.** Agencement (10) selon l'une des revendications précédentes, dans lequel la structure (12) est une aube de turbine (50) comportant une emplanture d'aube (52), une pièce de liaison (54) destinée à être reliée à une pale, une bande de recouvrement supérieure disposée sur la pièce de liaison (54), et une bande de recouvrement inférieure (56) qui relie l'emplanture d'aube (52) et la pièce de liaison (54), et le dispositif de réduction de vibration est prévu dans la bande de recouvrement inférieure (56) et/ou dans la bande de recouvrement supérieure (56) et/ou dans la pièce de liaison (54) ou sur celles-ci.

**8.** Agencement (10) selon l'une des revendications précédentes, dans lequel l'au moins un corps (16) présente une surface métallique ou en céramique et l'au moins une cavité (14) est délimitée par des surfaces métalliques ou en céramique de sorte que les contacts par impact ont lieu entre le métal et le métal, entre la céramique et la céramique ou entre le métal et la céramique.

Fig. 1

Fig. 2

Fig. 3a

Fig. 3b

Fig. 4a

Fig. 4b

**EP 4 095 412 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3667020 A1
- US 6827551 B1

- US 20120024646 A1